# EUROPEAN PATENT APPLICATION

(11) **EP 3 306 539 A1**
(43) Date of publication of application: **11.04.2018**
(21) Application number: 16803063.3
(22) Date of filing: 19.05.2016
(51) Int. Cl.: G06Q 10/06

(54) **BUSINESS OPERATIONS ASSISTANCE DEVICE AND BUSINESS OPERATIONS ASSISTANCE METHOD USING CONTRACT CANCELLATION PREDICTION**

(30) Priority: 29.05.2015 JP 2015109723
(71) Applicant: NEC Corporation, Tokyo 108-8001 (JP)
(72) Inventor: HARUTA Nobuko, Tokyo 108-8001 (JP)
(74) Representative: Betten & Resch
(86) International application number: PCT/JP2016/064879
(87) International publication number: WO 2016/194628

(57) **Abstract**

A business operations assistance device that uses a contract cancellation prediction to generate a business operations plan, enabling an operations supervisor to carry out business operations efficiently and with appropriate timing. In this business operations assistance device, a customer management unit rewrites contracted customer information whenever a change occurs in contracted customer information, which includes new contracts and cancelled contracts. On the basis of the contracted customer information rewritten by the customer management unit and analysis subject conditions set by a user and indicating which information among the contracted customer information is to be analyzed, an analysis/ prediction unit predicts, for each condition to be analyzed, a future cancellation rate of customers currently under contract. A cancellation rate list generation unit re-orders the contracted customers in order, beginning with the highest future cancellation rate as predicted by the analysis /prediction unit, and generates a contracted customer list showing the contracted customers in order, beginning with the highest future cancellation rate. A business operations plan generation unit identifies customers with a high future cancellation rate from the contracted customer list generated by the cancellation rate list generation unit, and generates a business operations plan prompting the operations supervisor regarding business operations with respect to the customers identified as having a high future cancellation rate.

## Description

### Technical Field

The disclosed subject matter relates to a business operations assistance device and a business operations assistance method for assisting business operations using a cancellation prediction (Churn prediction) of a customer in varieties of services.

The present application claims priority based on Japanese patent application No. 2015-109723 filed in Japan on May 29, 2015, the contents of which are incorporated herein.

### Background Art

In industries for offering varieties of services, various business operations are performed. Technologies for assisting scientifically the business operations according to products and services have been developed, as internet technologies or information processing technologies progress. For example, PTL (Patent Literature) 1 discloses a customer maintenance assisting system for effectively implementing campaigns by extracting member customers having high contract cancellation prediction probabilities using data mining tools. PTL 2 discloses a business activity support system for improving efficiencies of business operations by placing, on a map, a location of a customer where an event of large deposit or a matured fixed deposit is occurred. PTL 3 discloses a sales support system in which a host computer including a database storing sales store identification information, customer information and deal information, and a sales store terminal connected via a communication network. Further, the sales support system retrieves, from the database, the customer information and sales store identification information, based on the deal information matching with predetermined extraction condition, and generates a sales support map by combining the deal information and identified position information of the customer.

### Citation List

### Patent Literature

PTL 1: Japanese Patent Laid-Open No. 2002-366732
PTL 2: Japanese Patent Laid-Open No. 2009-271882
PTL 3: Japanese Patent Laid-Open No. 2012-208953

### Summary of Invention

### Technical Problem

In the industries for offering varieties of services, when a salesperson has obtained information indicating features of the customers having tendencies to cancel (customer churn), the business operations depend largely on experience of the salesperson because the business operations for preventing the cancellation are entrusted to the conclusion of the salesperson. Therefore, in the service industries, development of a system has been demanded for assisting to enable even an unskilled salesperson to perform the business operations for preventing the cancellation with proper timing.

The disclosed subject matter has been made to solve the foregoing problems, and the objective of which is to provide a business operations assistance device and a business operations assistance method for assisting business operations to a customer having a high churn rate by a cancellation prediction.

### Solution to Problem

A business operations assistance device includes: a customer management unit configured to rewrite contract customer information at every change of the contract customer information including a new contract and a cancellation; an analysis prediction unit configured to predict a future churn rate of a customer during a current contract period for each analysis object condition, based on the contract customer information after rewritten by the customer management unit and the analysis object condition, set by a user, indicating an analysis to be made toward which information of the contract customer information; a churn rate list generation unit configured to rearrange a contract customer in descending order of the future churn rate predicted by the analysis prediction unit and generate a contract customer list in which the contract customer is indicated in descending order of the future churn rate; and a business operations plan generation unit configured to identify the customer having a high future churn rate from the contract customer list generated by the churn rate list generation unit and generate a business operations plan describing business operations to the identified customer having the high future churn rate.

A business operations assistance method includes: rewriting contract customer information at every change of the contract customer information including a new contract and a cancellation; predicting a future churn rate of a customer during a current contract period for each analysis object condition, based on the contract customer information after rewritten and the analysis object condition, set by a user, indicating an analysis to be made toward which information of the contract customer information; rearranging a contract customer in descending order of the predicted future churn rate and generating a contract customer list in which the contract custom is indicated in descending order of the future churn rate; and identifying a customer having a high future churn rate from the contract customer list and generating a business operations plan describing business operations to the identified customer having the high future churn rate.

A program causing a computer to execute: processing for rewriting contract customer information at every change of the contract customer information including a new contract and a cancellation; processing for predicting a future churn rate of a customer during a current contract period for each analysis object condition, based on the contract customer information after rewritten and the analysis object condition, set by a user, indicating an analysis to be made toward which information of the contract customer information; processing for rearranging a contract customer in descending order of the predicted future churn rate and generating a contract customer list in which the contract customer is indicated in descending order of the future churn rate; and processing for identifying the customer having a high future churn rate from the contract customer list and generating a business operations plan describing business operations to the identified customer having the high future churn rate.

### Advantageous Effects of Invention

The business operations assistance device and the business operations assistance method according to the disclosed subject matter may generate a business operations plan in consideration of the cancellation prediction and enables the salesperson to effectively perform the business operations with proper timing. In addition, according to the disclosed subject matter, the business operations may be performed to the customer in descending order of future churn rate, thus reducing probability of the contract cancellation of the customer.

### Brief Description of Drawings

Fig. 1 is a block diagram of a business operations assistance device according to a first example embodiment;
Fig. 2 is a chart illustrating an example of a customer data table stored in a customer storage unit mounted on the business operations assistance device;
Fig. 3 is a flowchart illustrating processing of the business operations assistance device;
Fig. 4 is a block diagram of a business operations assistance device according to a second example embodiment;
Fig. 5 is a chart illustrating an example of a business information data table stored in a business information storage unit mounted on the business operations assistance device;
Fig. 6 is a block diagram of a business operations assistance device according to a third example embodiment;
Fig. 7 is a chart illustrating an example of a customer data table stored in a customer storage unit mounted on the business operations assistance device;
Fig. 8 is a flowchart illustrating processing of the business operations assistance device;
Fig. 9 is a block diagram of a business operations assistance device according to a fourth example embodiment;
Fig. 10 is a chart illustrating an example of a measures information data table stored in a measures information storage unit mounted on the business operations assistance device;
Fig. 11 is a flowchart illustrating processing of the business operations assistance device; and
Fig. 12 is a block diagram illustrating a minimum configuration of the business operations assistance device according to the disclosed subject matter.

### Description of Embodiments

A business operations assistance device and a business operations assistance method according to the disclosed subject matter will be described in detail with reference to attached drawings.

### First Example Embodiment

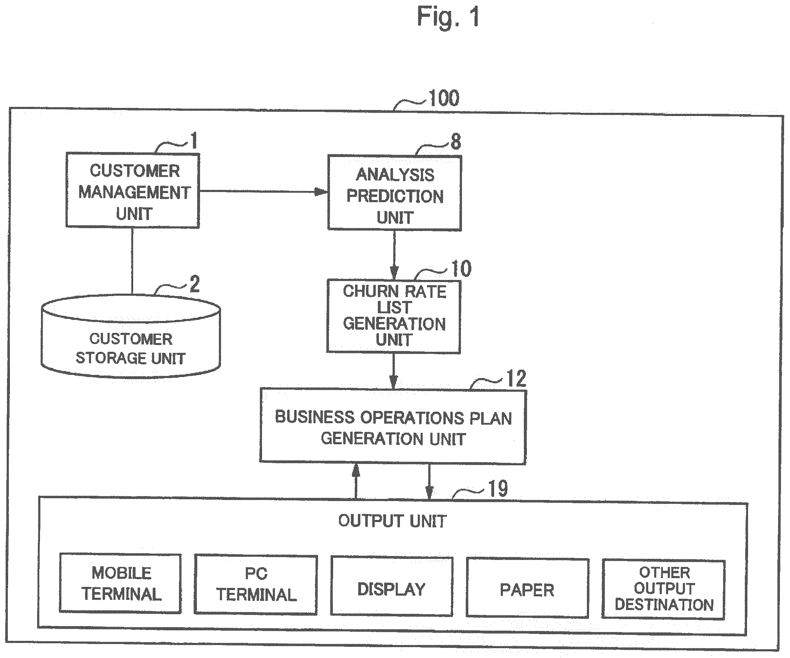

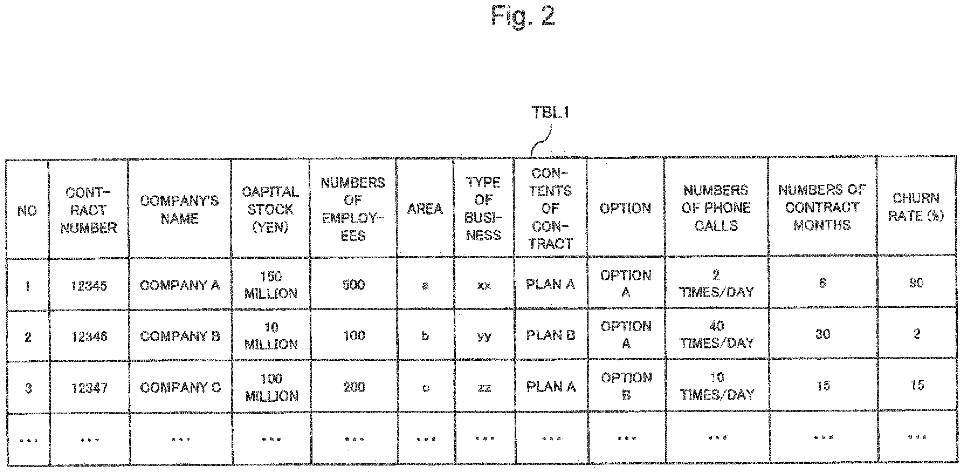

Fig. 1 is a block diagram of a business operations assistance device 100 according to the first example embodiment. The business operations assistance device 100 includes a customer management unit 1, a customer storage unit 2, an analysis prediction unit 8, a churn rate list generation unit 10, a business operations plan generation unit 12 and an output unit 19. Fig. 2 illustrates an example of a customer data table TBL1 stored in the customer storage unit 2.

The customer management unit 1 controls read and write processing for contract customer information registered in the customer data table TBL1 stored in the customer storage unit 2. The customer management unit 1 rewrites the contract customer information at every change of the contract customer information including a new contract and a cancellation. For example, the customer data table TBL1 in Fig. 2 illustrates accomplishments of contracts from past to present with respect to the contract customer information concerning mobile phone contracts (i.e., contract number, company's name, capital stock, numbers of employees, area, type of business, contents of contract, option, numbers of phone calls, numbers of contract months, churn rate).

The analysis prediction unit 8 predicts probability of a cancellation in near future (hereinafter, referred to as "future churn rate") at a time point of analysis for the customer during a current contract period for each analysis object condition, based on the contract customer information indicating the accomplishments of contracts from past to present registered in the customer data table TBL1 after rewritten by the customer management unit 1 and the analysis object conditions, set by a user, indicating an analysis to be made toward which information of the contract customer information. For example, for the contract customer information concerning the mobile phone contracts, the analysis prediction unit 8 generates prediction models for each analysis object condition by performing machine learning such as regression analysis in which the numbers of phone calls, the numbers of contract months and the like of the user are used as learning data. The prediction model is established by a prediction formula. A prediction result of the future churn rate that is a criterion variable is calculated by substituting explanatory variables generated from each of the contract customer information during the current contract period into the prediction formula. Specifically, the analysis prediction unit 8 classifies the contract customer information in the customer data table TBL1 by each analysis object condition indicated by combinations of the capital stock, the numbers of employees, the area, the type of business, the contents of contract, and the option. The analysis prediction unit 8 then sets the explanatory variables for the numbers of phone calls as XI, the explanatory variables for the numbers of contract months as X2, and the prediction results for the future churn rates as Y, for each analysis object condition. By applying these values to the prediction formulae "Y = a × X1 + b × X2 + c", correlation coefficients a, b and constants c are specified. Note that the user may change the foregoing analysis object condition as appropriate. Further, the explanatory variables are not limited to the numbers of phone calls and the numbers of contract months. In addition, the analysis prediction unit 8 may predict the future churn rate of the customer during the current contract period at every change of the contract customer information. Alternatively, the future churn rates may be predicted at a predetermined time such as the end of every month.

The churn rate list generation unit 10 rearranges the contract customers in descending order of the future churn rates predicted by the analysis prediction unit 8 for each analysis object condition. Thus, the churn rate list generation unit 10 generates a contract customer list in which the contract customers are arranged in descending order of the future churn rates.

The business operations plan generation unit 12 identifies the customers having high future churn rates in the contract customer list generated by the churn rate list generation unit 10. Thus, the business operations plan generation unit 12 generates a business operations plan document for urging the salesperson to the business operations to the customers having the high future churn rates.

The output unit 19 outputs the business operations plan document generated by the business operations plan generation unit 12. The output unit 19 has a setting function and may set the combinations of the capital stock, the numbers of employees, the area, the type of business, the contents of contract, and the option. The output unit 19 outputs the business operations plan documents for each set combination of the capital stock, the numbers of employees, the area, the type of business, the contents of contract, and options, using a method for outputting suitable for a mobile terminal, a PC (personal computer) terminal, a display, paper, and other output destination.

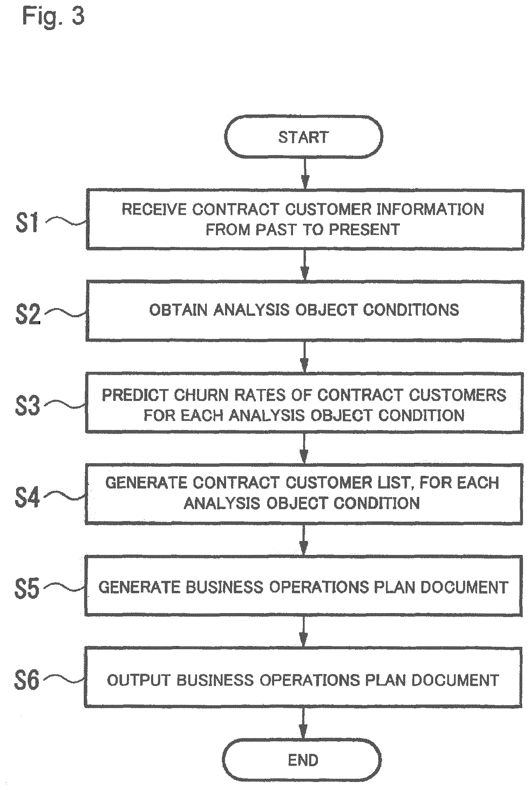

Next, the processing of the business operations assistance device 100 based on the contract customer information according to the mobile phone contracts will be described. Fig. 3 is a flowchart illustrating the processing of the business operations assistance device 100 according to the first example embodiment.

The customer management unit 1 rewrites the contract customer information registered in the customer data table TBL1 at every change of the contract customer information including the new contract and the cancellation. The customer management unit 1 outputs the rewritten contract customer information from past to present in the data table TBL1 to the analysis prediction unit 8. Meanwhile, the user inputs the analysis object conditions, indicating the analysis to be made toward which information of the contract customer information from past to present, to the analysis prediction unit 8. Specifically, the user inputs a time period of the analysis and the combinations of the capital stock, the numbers of employees, the area, the type of business, the contents of contract and the option to the analysis prediction unit 8.

The analysis prediction unit 8 receives the contract customer information from past to present of the customer data table TBL1 via the customer management unit 1, according to the analysis object conditions input by the user (step S1). The analysis prediction unit 8 obtains the analysis object conditions indicating the analysis to be made toward which information of the contract customer information from past to present (step S2).

The analysis prediction unit 8 predicts the future churn rates of contract customers for each analysis object condition by receiving the contract customer information from past to present of the customer data table TBL1 and the analysis object conditions indicating the analysis to be made toward which information of the contract customer information (step S3). For example, the analysis prediction unit 8 generates the prediction models by performing the machine learning such as regression analysis in which the numbers of phone calls, the numbers of contract months and the like for each user indicated by the contract customer information are used as the learning data. The prediction model is established by the prediction formula. The prediction result of the future churn rate that is the criterion variable is calculated by substituting the explanatory variables (e.g., the numbers of phone calls is twice/day, the numbers of contract months is ten months and the like) generated from the contract customer information during the current contract period into the prediction formula. Specifically, concerning the explanatory variables X1 for the numbers of phone calls, the explanatory variables X2 for the numbers of contract months, and the prediction results Y for the future churn rates, the analysis prediction unit 8 applies the values for each analysis object condition (e.g., in Company A of the customer data table TBL1, Y=90, X1=2, X2=6) to the prediction formulae "Y = a × X1 + b × X2 + c". Using a plurality of the prediction formulae, the correlation coefficients a, b and the constants c are specified for each analysis object condition. The analysis prediction unit 8 calculates the future churn rates for respective contract customers for each analysis object condition by substituting the explanatory variables indicated by the contract customer information into new prediction formulae "Y = a × X1 + b × X2 + c" in which the correlation coefficients a, b and the constants c specified for each analysis object condition are used. The analysis prediction unit 8 sends the predicted future churn rates for respective contract customers for each analysis object condition to the churn rate list generation unit 10.

Upon the future churn rates for respective contract customers for each analysis object condition from the analysis prediction unit 8 are received, the churn rate list generation unit 10 rearranges the contract customers in descending order of the future churn rates for each analysis object condition. The churn rate list generation unit 10 then generates the contract customer list in which the contract customers are indicated in descending order of the future churn rates (step S4). The churn rate list generation unit 10 sends the contract customer list to the business operations plan generation unit 12.

Upon the contract customer list from the churn rate list generation unit 10 is received, the business operations plan generation unit 12 identifies the customers having the high future churn rates with reference to the contract customer list. For example, the business operations contract generation unit 12 sets a threshold value TH of the churn rate that is a criteria for determining that the business operations are necessary due to the high future churn rates. The business operations plan generation unit 12 compares the threshold value TH with the future churn rate for each contract customer and identifies the contract customers having higher future churn rates than the threshold value TH as the customers having the high future churn rates. The business operations contract generation unit 12 generates a business operations plan document for urging the salesperson to the business operations to the customers with the need for the business operations due to the high future churn rates (step S5). The business operations plan generation unit 12 sends the business operations plan document to the output unit 19.

Upon the business operations plan document from the business operations plan generation unit 12 is received, the output unit 19 outputs contents of the business operations plan document to the mobile terminal, the PC terminal, the display, the paper, and the other output destination (step S6). The salesperson may perform the business operations with proper timing to the customers who are indicated in the business operations plan document output from the output unit 19 and may reduce the probability of the contract cancellations of the customers.

As described above, the functions of the business operations assistance device 100 according to the first example embodiment are summarized below. The customer management unit 1 rewrites the contract customer information at every change of the contract customer information including the new contract and the cancellation. The analysis prediction unit 8 predicts the future churn rates of the customers during the current contract period for each analysis object condition, based on the contract customer information after rewritten by the customer management unit 1 and the analysis object conditions, set by the user, indicating the analysis to be made toward which information of the contract customer information. The churn rate list generation unit 10 generates the contract customer list in which the contract customers are rearranged in descending order of the future churn rates predicted by the analysis prediction unit 8. The business operations contract generation unit 12 identifies the customers having the high future churn rates from the contract customer list generated by the churn rate list generation unit 10 and generates the business operations plan document for urging the salesperson to the business operations to the identified customers. Thus, by using the business operations assistance device 100, the salesperson may perform the business operations with proper timing to the customers having the high future churn rates and may reduce the probability of the contract cancellations of the customers.

### Second Example Embodiment

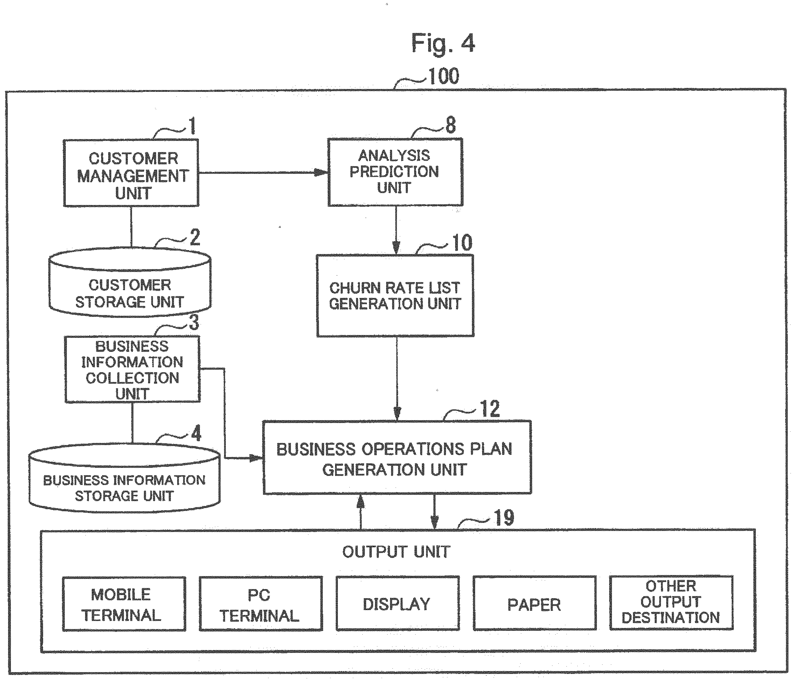

Next, the business operations assistance device 100 according to the second example embodiment will be described. Fig. 4 is a block diagram illustrating a configuration of the business operations assistance device 100. The business operations assistance device 100 according to the second example embodiment includes a business information collection unit 3 and a business information storage unit 4 in addition to the components of the business operations assistance device 100 according to the first example embodiment (i.e., the customer management unit 1, the customer storage unit 2, the analysis prediction unit 8, the churn rate list generation unit 10, the business operations plan generation unit 12, and the output unit 19).

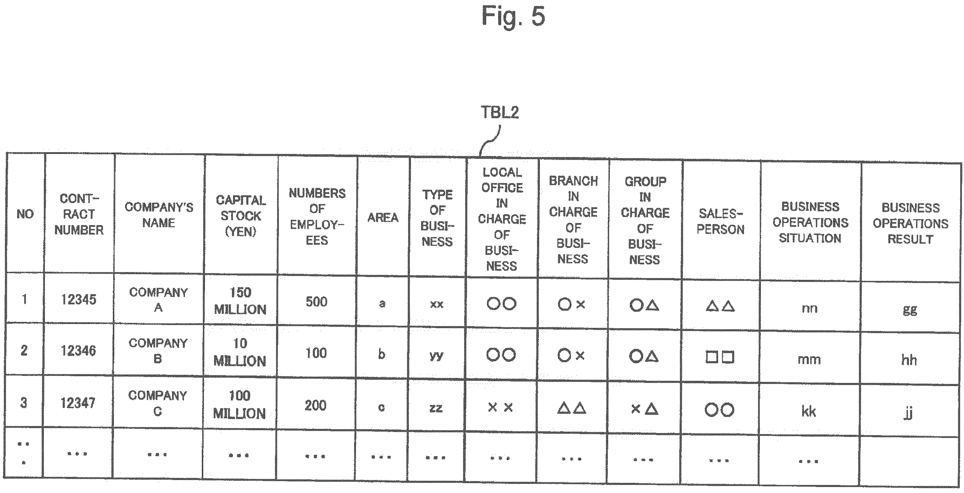

Fig. 5 illustrates an example of a business information data table TBL2 stored in the business information storage unit 4. The business information collection unit 3 controls read and write processing for business information registered in the business information data table TBL2 stored in the business information storage unit 4. The business information collection unit 3 rewrites the business information at every change of the business information. The business information registered in the business information data table TBL2 includes a local office in charge of business, a branch in charge of business, a group in charge of business, a salesperson, a business operations situation (e.g., daily report), and a business operations result in addition to a part of the stored information of the customer information data table TBL1 (the contract number, the company's name, the capital stock, the numbers of employees, the area, and the type of business).

The analysis prediction unit 8 predicts the future churn rates of the customers during the current contract period for each analysis object condition, based on the contract customer information registered in the customer data table TBL1 after rewritten by the customer management unit 1, the business information registered in the business information data table TBL2 after rewritten by the business information collection unit 3, and analysis object conditions, set by a user, indicating the analysis to be made toward which information of the contract customer information and indicating the analysis to be made toward which information of the business information. For example, the analysis prediction unit 8 generates the prediction models for each analysis object condition by performing the machine learning such as regression analysis in which the numbers of phone calls, the numbers of contract months and the like of the user indicated by the contract customer information concerning the mobile phone contracts are used as the learning data. The prediction model is established by the prediction formula. The prediction result of the future churn rate that is the criterion variable is calculated by substituting each of the explanatory variables generated from each of the contract customer information during the current contract period into the prediction formula. Specifically, the analysis prediction unit 8 classifies the analysis object conditions indicated by combinations of the capital stock, the numbers of employees, a position, the type of business, the contents of contract, and the option (refer to Fig. 2) and of the local office in charge of business, the branch in charge of business, the group in charge of business, the salesperson, the business operations situation, and the business operations result (refer to Fig. 5), with reference to the contract customer information in the customer data table TBL1 and the business information in the business information data table TBL2. The analysis prediction unit 8 then sets the explanatory variables for the numbers of phone calls as XI, the explanatory variables for the numbers of contract months as X2, and the prediction results for the future churn rates as Y for each analysis object condition, applies the Y, X1 and X2 for respective contract customers for each analysis object condition to the prediction formulae "Y = a × X1 + b × X2 + c", and specifies the correlation coefficients a, b and the constants c. Note that the user may change the foregoing analysis object condition as appropriate. Further, the explanatory variables are not limited to the numbers of phone calls and the numbers of contract months. Note that the analysis prediction unit 8 may predict the future churn rate of the customer during the current contract period at every change of either the contract customer information or the business information. Alternatively, the future churn rates of the customer during the current contract period may be predicted at the predetermined time such as the end of every month.

The churn rate list generation unit 10 rearranges the contract customers in descending order of the future churn rates predicted by the analysis prediction unit 8 for each analysis object condition. Thus, the churn rate list generation unit 10 generates the contract customer list in which the contract customers are indicated in descending order of the future churn rates.

The business operations plan generation unit 12 identifies the customers having the high future churn rates in the contract customer list generated by the churn rate list generation unit 10. Thus, the business operations plan generation unit 12 generates the business operations plan document urging the salesperson to the business operations to the identified customers having the high future churn rates.

The output unit 19 outputs the business operations plan document generated by the business operations plan generation unit 12. The output unit 19 has the setting function for setting combinations of the capital stock, the numbers of employees, the area, the type of business, the contents of contract, the option, the local office in charge of business, the branch in charge of business, the group in charge of business, the salesperson and the like. The output unit 19 outputs the business operations plan documents for each set combination of the capital stock, the numbers of employees, the area, the type of business, the contents of contract, and options, using a method for outputting suitable for the mobile terminal, the PC terminal, the display, the paper, and the other output destination.

As described above, the processing of the business operations assistance device 100 according to the second example embodiment is added processing according to the business information, for the analysis object condition, registered in the business information data table TBL2 after rewritten by the business information collection unit 3. In other words, the processing of the business operations assistance device 100 according to the second example embodiment is similar to the processing of the business operations assistance device 100 according to the first example embodiment (refer to Fig. 3) except for the processing according to the business information, therefore the description thereof will be omitted.

As described above, the functions of the business operations assistance device 100 according to the second example embodiment are summarized below. First, the customer management unit 1 rewrites the contract customer information at every change of the contract customer information including the new contract and the cancellation. The analysis prediction unit 8 predicts the future churn rates of the customers during the current contract period for each analysis object condition, based on the contract customer information after rewritten by the customer management unit 1 and the analysis object conditions, set by the user, indicating the analysis to be made toward which information of the contract customer information. The churn rate list generation unit 10 generates the contract customer list in which the contract customers are indicated in descending order of future churn rates predicted by the analysis prediction unit 8. The business operations plan generation unit 12 identifies the customers having the high future churn rates from the contract customer list generated by the churn rate list generation unit 10 and generates the business operations plan urging the salesperson to the business operations to the identified customers having the high future churn rates. Thus, the salesperson may perform efficiently the business operations with proper timing by using the business operations assistance device 100 and may reduce the probability of the contract cancellations of the customers.

Further, the business information collection unit 3 controls the read and write processing for business information registered in the business information data table TBL2 stored in the business information storage unit 4. The business information collection unit 3 rewrites the business information at every change of the business information. The analysis prediction unit 8 predicts the future churn rates of the customers during the current contract period for each analysis object condition, based on the contract customer information registered in the customer data table TBL1 after rewritten by the customer management unit 1, the business information registered in the business information table after rewritten by the business information collection unit 3, and the analysis object conditions, set by the user, indicating the analysis to be made toward which information of the contract customer information and indicating the analysis to be made toward which information of the business information. Thus, the salesperson may set the analysis object condition in detail, may perform efficiently the business operations with proper timing for each customer by classifications of the customers in detail, and may reduce the probability of the contract cancellations of the customers.

### Third Example Embodiment

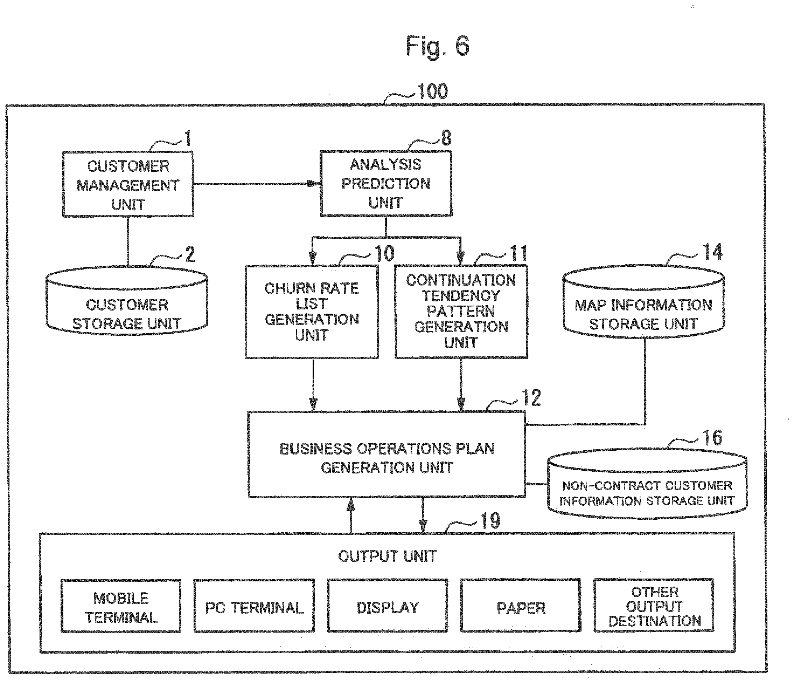

Next, the business operations assistance device 100 according to the third example embodiment will be described. Fig. 6 is a block diagram illustrating a configuration of the business operations assistance device 100 according to the third example embodiment. The business operations assistance device 100 according to the third example embodiment includes a continuation tendency pattern generation unit 11, a map information storage unit 14, and a non-contract customer information storage unit 16 in addition to the components of the business operations assistance device 100 according to the first example embodiment (the customer management unit 1, the customer storage unit 2, the analysis prediction unit 8, the churn rate list generation unit 10, the business operations plan generation unit 12, and the output unit 19).

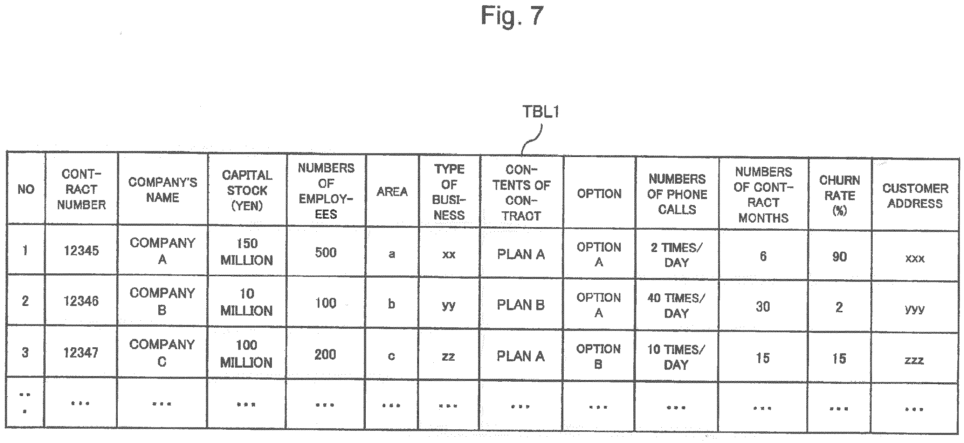

The customer storage unit 2 mounted on the business operations assistance device 100 according to the third example embodiment stores the customer data table TBL1 illustrated in Fig. 7. In the customer data table TBL1 of Fig. 7, customer addresses are registered in addition to the information registered in the customer data table TBL1 of Fig. 2.

The continuation tendency pattern generation unit 11 identifies the analysis object condition corresponding to a contract customer having a low future churn rate predicted by the analysis prediction unit 8 and generates a continuation tendency pattern list indicating the identified analysis object condition.

The business operations plan generation unit 12 generates a map by using map information stored in the map information storage unit 14. The map information includes correspondence relationships between an address and coordinates corresponding to the address. The business operations plan generation unit 12 specifies a route for performing the business operations to the customers in descending order of the future churn rates and plots the specified route and positions of companies of the customers on the map that is generated based on the map information, based on the map information and customer address information corresponding to the high future churn rate customer registered in the contract customer list generated by the churn rate list generation unit 10. Specifically, the business operations plan generation unit 12 locates the positions of the companies of the customers on the map that is generated based on the map information and specifies the route by connecting together, in the shortest route, a plurality of the positions of the companies of the customers arranged in descending order of churn rates. The business operations plan generation unit 12 plots the specified route and the positions of the companies of the customers on the map. Further, the business operations plan generation unit 12 displays the customer information of the customers having high future churn rates on the map.

The business operations plan generation unit 12 identifies, from among the non-contract customer information, a customer who matches with the analysis object condition indicated by the continuation tendency pattern list generated by the continuation tendency pattern generation unit 11. The non-contract customer information is registered in the non-contract customer information data table TBL3 (not illustrated) stored in the non-contract customer information storage unit 16. The non-contract customer information is information relating to non-contract customers and, similar to the contract customer information, includes the company's name, the capital stock, the numbers of employees, the area, the type of business, the customer address and the like. Further, the customer identified by the business operations plan generation unit 12 from among the non-contract customer information is the non-contract customer having the same features as those of the low future churn rate customer. Therefore, if the salesperson may set up a contract with the non-contract customer as a new customer, it is more likely to be capable of continuing the contract for a long term. The business operations plan generation unit 12 generates the business operations plan for urging the salesperson to the business operations to the customer identified from among the non-contract customer information. The non-contract customer information is, for example, company information available on a web site concerning the non-contract customer, a fee-charging company information, or the like.

When the identified customer from among the non-contract customer information is within a predetermined distance from the specified route on the map, the business operations plan generation unit 12 specifies the route for performing the business operations to the identified customer from among the non-contract customer information prior to the customers having the high future churn rates and generates a business plan including the route. Specifically, the business operations plan generation unit 12 calculates a shortest distance along a route passable between a region on the map indicated by the specified route and a position on the map indicated by the customer address of the non-contract customer information and calculates an actual shortest route by multiplying the shortest distance by a reciprocal of a scale of the map. The business operations plan generation unit 12 compares the actual shortest route with the predetermined distance determined in advance. When the actual shortest distance falls within the predetermined distance, the business operations plan generation unit 12 determines that the identified customer from among the non-contract customer information is within the predetermined distance from the specified route and generates the business operations plan by adding the route for performing the business operations to the identified customer from among the non-contract customer information into the route for performing the business operations to the customers in descending order of the future churn rates.

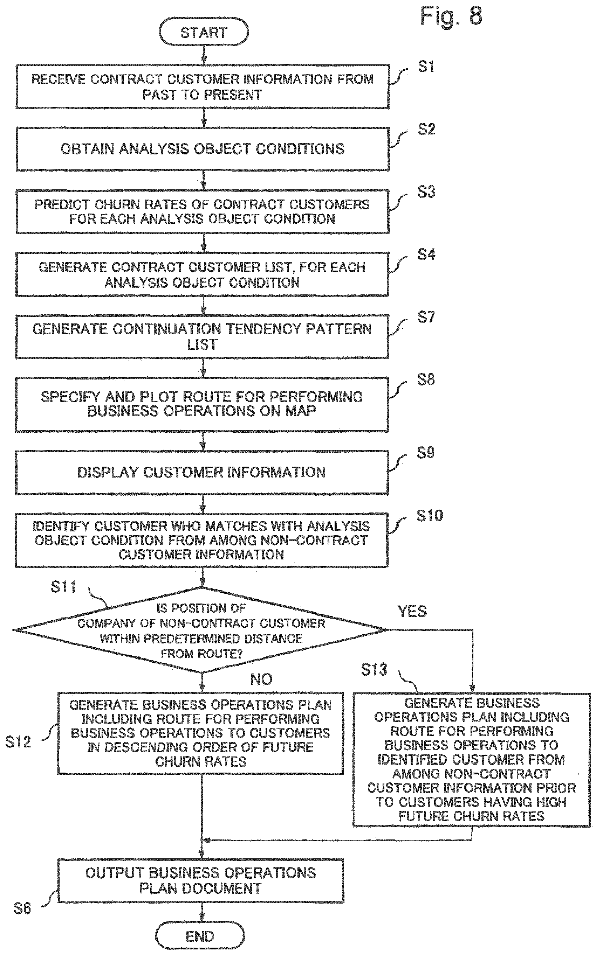

Next, processing of the business operations assistance device 100 according to the third example embodiment will be described. Fig. 8 is a flowchart illustrating the processing of the business operations assistance device 100 according to the third example embodiment. Similar to the business operations assistance device 100 according to the first example embodiment, the processing concerning the contract of the mobile phone will also be described in the business operations assistance device 100 according to the third example embodiment. Note that the steps S1 to S4 and S6 in the flowchart of Fig. 8 is similar to those of the flowchart of Fig. 3, therefore the detailed description thereof will be omitted. Thus, the steps S7 to S13 will be described in the processing of the business operations assistance device 100 according to the third example embodiment.

In Fig. 8, after the steps S1 and S2, the analysis prediction unit 8 of the business operations assistance device 100 predicts the future churn rates of the contract customers for each analysis object condition (step S3). The analysis prediction unit 8 sends the predicted future churn rates for the respective contract customers for each analysis object condition to the churn rate list generation unit 10 and the continuation tendency pattern generation unit 11. The churn rate list generation unit 10 rearranges the contract customers in descending order of the future churn rates for each analysis object condition and generates the contract customer list in which the contract customers are indicated in descending order of the future churn rates (step S4). The churn rate list generation unit 10 sends the contract customer list to the business operations plan generation unit 12. Meanwhile, upon the future churn rates for the respective contract customers for each analysis object condition from the analysis prediction unit 8 are received, the continuation tendency pattern generation unit 11 identifies the analysis object condition corresponding to the contract customer having the low future churn rate and generates the continuation tendency pattern list in which the identified analysis object condition is indicated (step S7). The continuation tendency pattern generation unit 111 sends the continuation tendency pattern list to the business operations plan generation unit 12.

Upon the contract customer list from the churn rate list generation unit 10 is received, the business operations plan generation unit 12 identifies the customers having the high future churn rates in the contract customer list. Further, the business operations plan generation unit 12 reads the map information from the map information storage unit 14. The business operations plan generation unit 12 generates the map by using the map information. The business operations plan generation unit 12 specifies the route for performing the business operations to the customers in descending order of the future churn rates to the customers having the high future churn rates and plots the specified route and the positions of the companies of the customers on the map generated by using the map information, based on the map information and the customer address information corresponding to the customers having the high future churn rates in the contract customer list (step S8). Further, the business operations plan generation unit 12 displays the customer information of the customers having the high future churn rates on the map (step S9). In addition, the business operations plan generation unit 12 identifies, from among the non-contract customer information registered in the non-contract customer information data table TBL3 stored in the non-contract customer information storage unit 16, the customer who matches with the analysis object condition indicated by the continuation tendency pattern list generated by the continuation tendency pattern generation unit 11 (step S10).

Next, the business operations plan generation unit 12 determines whether or not the position of the company of the identified customer from among the non-contract customer information is within the predetermined distance from the route for performing the business operations to the customers having the high future churn rates (step S11). When the position of the company of the identified customer from among the non-contract customer information is not within the predetermined distance from the route for performing the business operations to the customers in descending order of the future churn rates (i.e., the determined result "NO" in the step S11), the business operations plan generation unit 12 generates the business operations plan including the route for performing the business operations to the customers in descending order of the future churn rates (step S12). Specifically, the business operations plan generation unit 12 generates the map by using the map information from the map information storage unit 14. Then, the business operations plan generation unit 12 specifies the route for performing the business operations to the customers in descending order of the future churn rates and plots the specified route and the positions of the companies of the customers on the map generated by using the map information, based on the map information and the customer address information of the customers having the high future churn rates in the contract customer list generated by the churn rate list generation unit 10. Further, the business operations plan generation unit 12 calculates a distance from the specified route on the map to the position of the company of the identified non-contract customer, based on the route specified on the map generated by using the map information and the position of the company of the identified customer from among the non-contract customer information. When the calculated distance does not fall within the predetermined distance, the business operations plan generation unit 12 generates the business operations plan document including the map in which the route for performing the business operations to the customers in descending order of the future churn rates and the positions of the companies of the customers having the high future churn rates are plotted and the customer information. Then, the business operations plan generation unit 12 sends the business operations plan document to the output unit 19.

On the other hand, when the position of the company of the identified customer from among the non-contract customer information is within the predetermined distance from the route for performing the business operations to the customers in descending order of the future churn rates (i.e., the determined result "YES" in the step S11), the business operations plan generation unit 12 generates the business operations plan including the route for performing the business operations to the identified customer from among the non-contract customer information prior to the customers having the high future churn rates (step S13). Specifically, the business operations plan generation unit 12 generates the map by using the map information from the map information storage unit 14. Then, the business operations plan generation unit 12 specifies the route for performing the business operations to the customers in descending order of the future churn rates and plots the specified route and the positions of the companies of the customers on the map, based on the map information and the customer address information of the customers having the high future churn rates in the contract customer list generated by the churn rate list generation unit 10. Further, the business operations plan generation unit 12 calculates a distance from the specified route on the map to the position of the company of the identified non-contract customer, based on the route specified on the map and the position of the company of the identified customer from among the non-contract customer information. When the calculated distance falls within the predetermined distance, the business operations plan generation unit 12 specifies the route for performing the business operations to the identified customer from among the non-contract customer information prior to the customers having the high future churn rates. The business operations plan generation unit 12 generates the business operations plan document including the map in which the specified route on the map, the position of the company of the non-contract customer, and the positions of the companies of the customers having the high future churn rates are plotted and the customer information. The business operations plan generation unit 12 then sends the business operations plan document to the output unit 19 (step S6).

Upon the business operations plan document from the business operations plan generation unit 12 is received, the output unit 19 outputs the contents of the business operations plan document to the mobile terminal, the PC terminal, the display, the paper, and the other output destination. The salesperson may perform the business operations with proper timing to the customers indicated in the business operations plan document output by the output unit 19 and may reduce the probability of the contract cancellations of the customers. Further, the salesperson, with the business operations plan document, may easily recognize the route for performing the business operations to the new customer having the low future churn rate as well as to the customers in descending order of the future churn rates, the positions of the companies of the customers, and the customer information.

As described above, the functions of the business operations assistance device 100 according to the third example embodiment are summarized below. In the business operations assistance device 100, the customer management unit 1 rewrites the contract customer information at every change of the contract customer information including the new contract and the cancellation. The analysis prediction unit 8 predicts the future churn rates of the customers during the current contract period for each analysis object condition, based on the contract customer information after rewritten by the customer management unit 1 and the analysis object conditions, set by the user, indicating the analysis to be made toward which information of the contract customer information. The churn rate list generation unit 10 generates the contract customer list indicating the contract customers that are rearranged in descending order of the future churn rates predicted by the analysis prediction unit 8. The business operations plan generation unit 12 identifies the customers having the high future churn rates from the contract customer list generated by the churn rate list generation unit 10 and generates the business operations plan for urging the salesperson to the business operations to the identified customers having the high future churn rates. Thus, the salesperson can perform efficiently the business operations with proper timing and can reduce the probability of the contract cancellations of the customers.

Further, the business operations plan generation unit 12 determines whether or not the position of the company of the identified customer from among the non-contract customer information is within the predetermined distance from the route for performing the business operations to the customers in descending order of the future churn rates. When the position of the company of the identified customer from among the non-contract customer information is not within the predetermined distance from the route for performing the business operations to the customers in descending order of the future churn rates, the business operations plan generation unit 12 generates the business operations plan including the route for performing the business operations to the customers in descending order of the future churn rates. On the other hand, when the position of the company of the identified customer from among the non-contract customer information is within the predetermined distance from the route for performing the business operations to the customers in descending order of the future churn rates, the business operations plan generation unit 12 generates the business operations plan including the route for performing the business operations to the identified customer from among the non-contract customer information prior to the customers having the high future churn rates. Thus, the salesperson can easily recognize the route for performing the business operations to the new customer having the low future churn rate as well as to the customers in descending order of the future churn rates, the positions of the companies of the customers, and the customer information. Therefore, the salesperson can reduce the probability of the contract cancellations of the customers by performing the business operations to the customers having the high future churn rates as well as can perform efficiently the business operations for obtaining the new customer having the low future churn rate.

### Fourth Example Embodiment

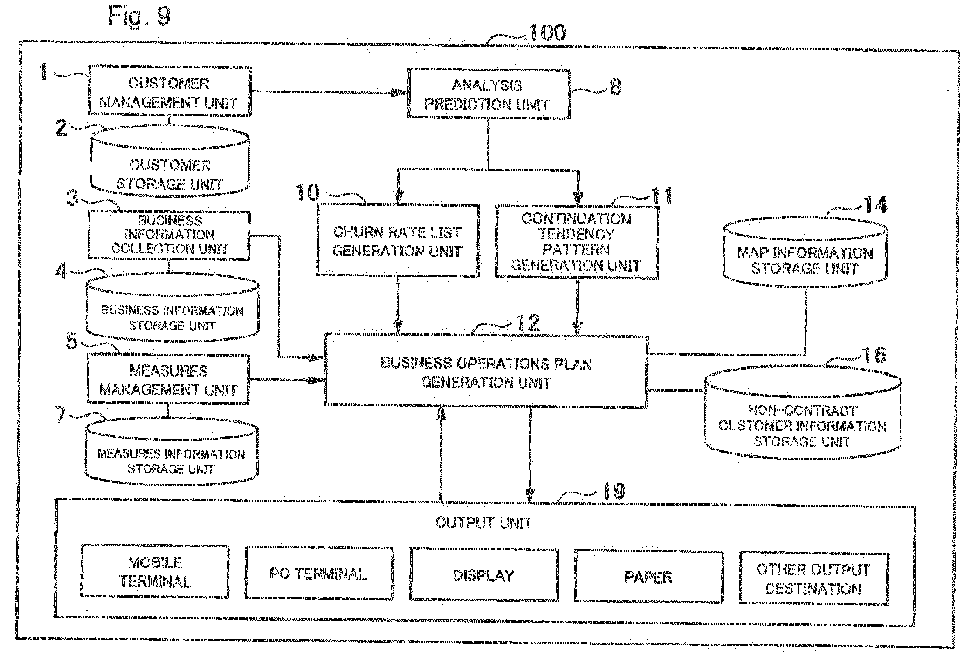

The business operations assistance device 100 according to the fourth example embodiment will be described. Fig. 9 is a block diagram of the business operations assistance device 100 according to the example embodiment 4. The business operations assistance device 100 according to the fourth example embodiment includes a measures management unit 5 and a measures information storage unit 7 in according to the components according to the third example embodiment (i.e., the customer management unit 1, the customer storage unit 2, the analysis prediction unit 8, the churn rate list generation unit 10, the continuation tendency pattern generation unit 11, the business operations plan generation unit 12, the map information storage unit 14, the non-contract customer information storage unit 16, and the output unit 19) and a part of the components according to the second example embodiment (i.e., the business information collection unit 3 and the business information storage unit 4). In the business operations assistance device 100 according to the fourth example embodiment, detailed descriptions for the same components as those of the second example embodiment and the third example embodiment will be omitted.

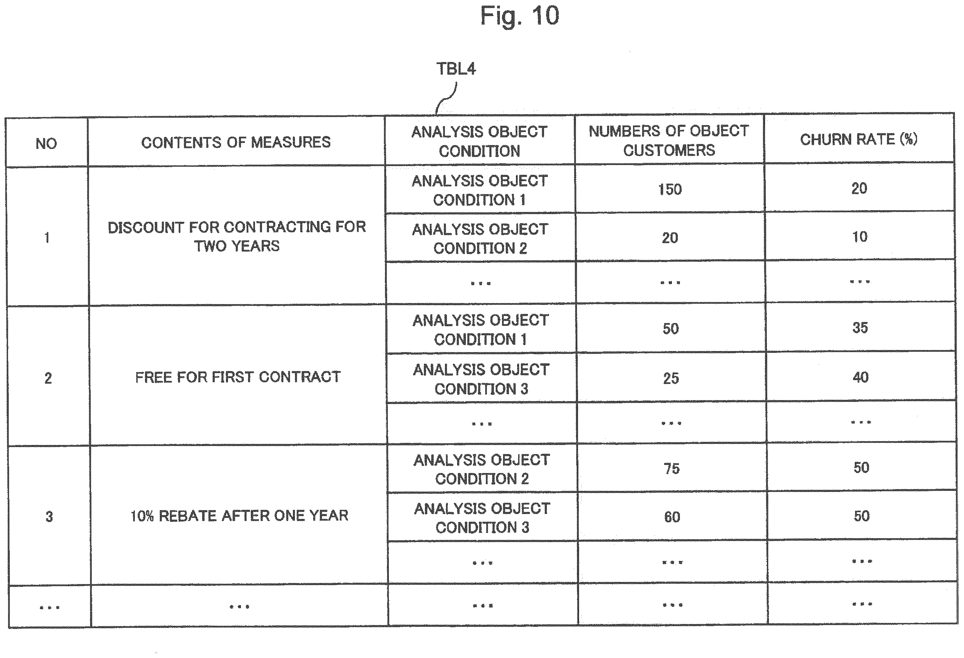

Fig. 10 is the chart illustrating an example of the measures information data table TBL4 stored in the measures information storage unit 7. In the measures information data table TBL4, measures information indicating correspondence relationships between contents of measures, the analysis object condition corresponding to the customer implemented the measures, numbers of object customers implemented the measures, and a future churn rate when the measures are implemented to the customer is stored. The measures management unit 5 controls read and write processing for measures information registered in the measures information data table TBL4 stored in the measures information storage unit 7. The measures management unit 5 rewrites the measures information at every change of the measures information. The measures management unit 5 outputs the measures information after rewritten to the business operations plan generation unit 12.

The business operations plan generation unit 12 has a function for computing the future churn rates estimated when the measures are implemented to the customer in addition to the functions of the business operations plan generation unit 12 according to the foregoing example embodiments. Specifically, the business operations plan generation unit 12 compares the analysis object conditions corresponding to the object customers to be performed the business operations with the analysis object conditions indicated by the measures information registered in the measures information data table TBL4, identifies the customers corresponding to the analysis object condition common to the both conditions, and computes the future churn rates when the measures are implemented to the identified customers. Thus, the contents of the measures corresponding to the future churn rate estimated when the measures equal to or below predetermined churn rate are implemented to the customers, from among the future churn rates when the measures are implemented to the identified customers in the measures information data table TBL4, are determined as the contents of the measures to be implemented to the customers. The business operations plan generation unit 12 determines both the contents of the measures to be implemented to the customers during the current contract period having high churn rates equal to or above the predetermined churn rate and the contents of the measures to be implemented to the new customers, to be performed the business operations, who have low churn rates equal to or below the predetermined churn rate.

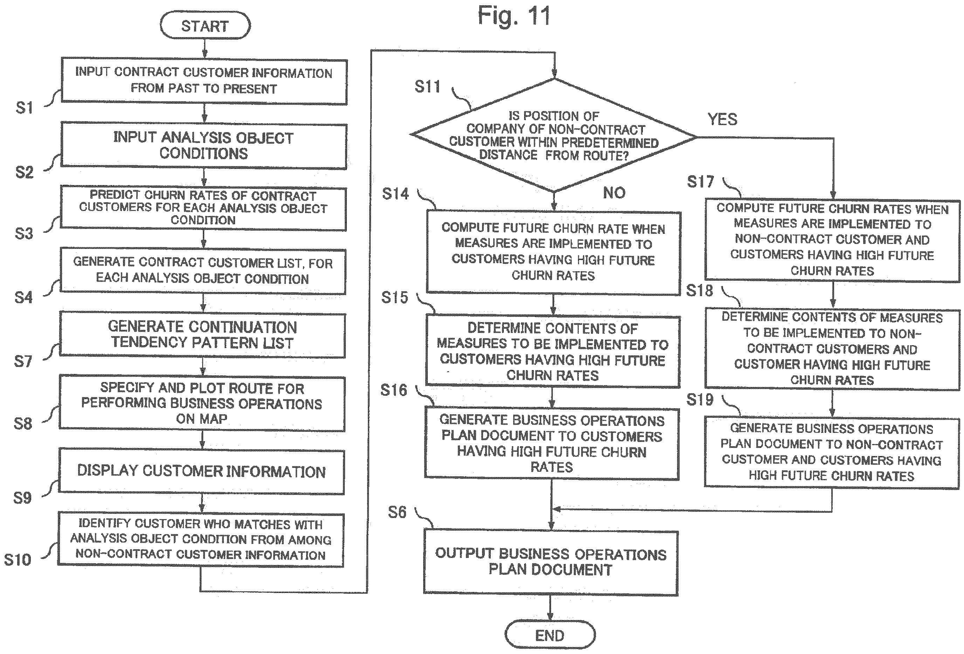

Next, processing of the business operations assistance device 100 according to the fourth example embodiment will be described. Fig. 11 is a flowchart illustrating the processing of the business operations assistance device 100 according to the fourth example embodiment. The processing concerning the mobile phone contracts will be described in the fourth example embodiment, like the third example embodiment. In the processing of the business operations assistance device 100 according to the fourth example embodiment, the business information of the business information data table TBL2 after rewritten by the business information collection unit 3 is added, as the analysis object condition, to the processing of the business operations assistance device 100 according to the third example embodiment (refer to Fig. 8). Therefore, in the flowchart of Fig. 11, the descriptions concerning the steps S1 to S11 illustrated in Fig. 8 will be omitted. Therefore, the descriptions for the processing of the business operations assistance device 100 according to the fourth example embodiment will be made about the steps S14 to S19.

In step S11, the business operations plan generation unit 12 determines whether or not the position of the company of the identified customer from among the non-contract customer information is within the predetermined distance from the route for performing the business operations to the customers in descending order of the future churn rates. When the position of the company of the identified customer from among the non-contract customer information is not within the predetermined distance from the route for performing the business operations to the customers in descending order of the future churn rates (i.e., the determined result "NO" in the step S11), the business operations plan generation unit 12 compares each of the analysis object conditions corresponding to each object customer having the high future churn rates to be performed the business operations with each of the analysis object conditions indicated by the measures information registered in the measures information data table TBL4 and computes the future churn rates estimated when the measures are implemented to the customers corresponding to the analysis object condition common to the both conditions (step S14). The business operations plan generation unit 12 determines the contents of the measures corresponding to the future churn rate estimated when the measures equal to or below the predetermined churn rate, from among the future churn rates estimated when the measures are implemented to the identified customers in the measures information data table TBL4, as the contents of the measures to be implemented to the customers (step S15). The business operations plan generation unit 12 generates the business operations plan document including the map in which the route for performing the business operations to the customers in descending order of the future churn rates and the positions the companies of the customers having the high future churn rates are plotted, the customer information, and the contents of the measures to be implemented to the object customers of the business operations (step S16). Then, the business operations plan generation unit 12 outputs the business operations plan document to the output unit 19 (step S6).

On the other hand, when the position of the company of the identified customer from among the non-contract customer information is within the predetermined distance from the route for performing the business operations to the customers in descending order of the future churn rates (i.e., the determined result "YES" in the step S11), the business operations plan generation unit 12 compares the analysis object conditions corresponding to each of the non-contract customer to be the business operations object and the customers having the high future churn rates with the analysis object conditions indicated by the measures information in the measures information data table TBL4 and computes the future churn rates estimated when the measures are implemented to the customer corresponding to the analysis object condition common to the both conditions (step S17). The business operations plan generation unit 12 determines the contents of the measures corresponding to the future churn rates estimated when the measures equal to or below the predetermined churn rate, from among the future churn rates estimated when the measures are implemented to the identified customers in the measures information data table TBL4, as the contents of the measures to be implemented to the customer (step S18). The business operations plan generation unit 12 generates the business operations plan document including the map in which the route specified on the map generated by using the map information and the position of the company of the non-contract customer and the positions of the companies of the customers having the high future churn rates are plotted, the customer information, and the contents of the measures to be implemented to the object customer of the business operations (step S19). Then, the business operations plan generation unit 12 outputs the business operations plan document to the output unit 19.

The output unit 19 outputs the business operations plan document generated by the business operations plan generation unit 12. The output unit 19 has a setting function that sorts contents of outputs for the business branch, for the salesperson etc. The output unit 19 outputs the business operations plan documents using a method for outputting suitable for the mobile terminal, the PC terminal, the display, the paper, and the other output destination. The salesperson can perform the business operations with proper timing to the customers indicated in the business operations plan document output by the output unit 19 and can reduce the probability of the contract cancellations of the customers. Further, the salesperson, with reference to the business operations plan document, can easily recognize the route for performing the business operations to new customers having the low future churn rate as well as to the customers in descending order of the future churn rates, the positions of the companies of the customers, and the customer information. In addition, the salesperson, with reference to the business operations plan document, can implement proper measures to the new customer having the low future churn rate as well as to the customers in descending order of the future churn rates and can reduce the probability of the cancellations of the customers for the future as well as can improve the probability of obtaining the new customer.

As described above, the functions of the business operations assistance device 100 according to the fourth example embodiment are summarized below. The customer management unit 1 first rewrites the contract customer information at every change of the contract customer information including the new contract and the cancellation. The analysis prediction unit 8 predicts the future churn rates of the customers during the current contract period for each analysis object condition, based on the contract customer information after rewritten by the customer management unit 1 and the analysis object conditions, set by the user, indicating the analysis to be made toward which information of the contract customer information. The churn rate list generation unit 10 rearranges the contract customers in descending order of the future churn rates predicted by the analysis prediction unit 8 and generates the contract customer list in which the contract customers are indicated in descending order of the future churn rates. The business operations plan generation unit 12 identifies the customers having the high future churn rates from the contract customer list generated by the churn rate list generation unit 10 and generates the business operations plan for urging the salesperson to the business operations to the identified customers having the high future churn rates. Thus, the salesperson can perform efficiently the business operations with proper timing and can reduce the probability of the contract cancellations of the customers.

Further, the business operations plan generation unit 12 determines whether or not the position of the company of the identified customer from among the non-contract customer information is within the predetermined distance from the route for performing the business operations to the customers in descending order of the future churn rates. When the position of the company of the identified customer from among the non-contract customer information is not within the predetermined distance from the route for performing the business operations to the customers in descending order of the future churn rates, the business operations plan generation unit 12 generates the business operations plan including the route for performing the business operations to the customers in descending order of the future churn rates. On the other hand, when the position of the company of the identified customer from among the non-contract customer information is within the predetermined distance from the route for performing the business operations to the customers in descending order of the future churn rates, the business operations plan generation unit 12 generates the business operations plan including the route for performing the business operations to the identified customer from among the non-contract customer information prior to the customers having the high future churn rates. Thus, the salesperson can easily recognize the route for performing the business operations to new customers having the low future churn rate as well as to the customers in descending order of the future churn rates, the positions of the companies of the customers, and the customer information. As a result, the probability of the contract cancellations of the customers is reduced, and the salesperson can also perform efficiently the business operations for preventing the cancellations of the customers as well as the business operations for obtain the new customer having the low future churn rate.

Further, the business operations plan generation unit 12 compares the analysis object conditions corresponding to the object customer of the business operations with the analysis object conditions indicated by the measures information in the measures information data table TBL4 and computes the future churn rates estimated when the measures are implemented to the customers corresponding to the analysis object condition common to the both conditions. The business operations plan generation unit 12 identifies the contents of the measures corresponding to the future churn rate equal to or below predetermined churn rate as the contents of the measures to be implemented to the object customers of the business operations. Thus, the salesperson can implement the proper measures to the customers in descending order of the future churn rates as well as to the new customer having the low future churn rate and can reduce the probability of the cancellation for the future as well as can improve the probability of obtaining the new customers.

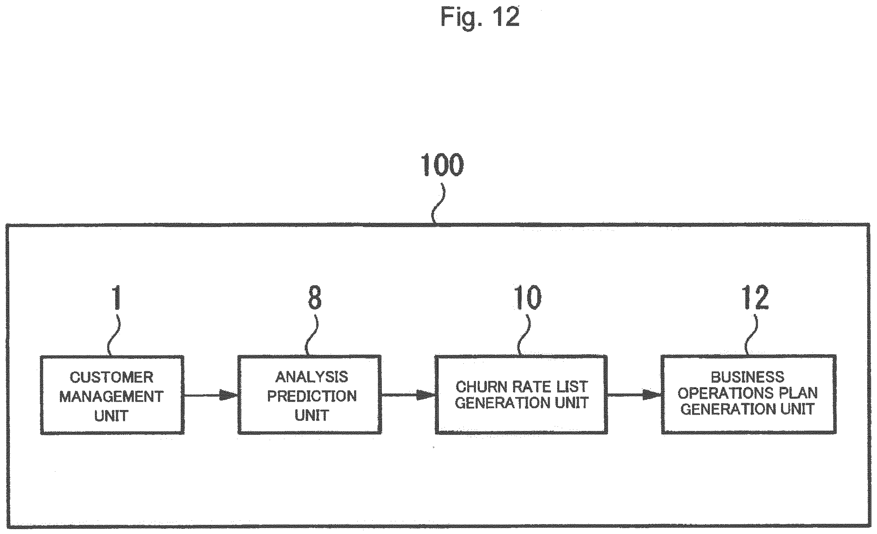

Fig. 12 is the block diagram illustrating the minimum configuration of the business operations assistance device 100 according to the disclosed subject matter. The business operations assistance device 100 includes the customer management unit 1, the analysis prediction unit 8, the churn rate list generation unit 10, and the business operations plan generation unit 12. The customer management unit 1 rewrites the contract customer information at every change of the contract customer information including the new contract and the cancellation. The analysis prediction unit 8 predicts the future churn rates of the customers during the current contract period for each analysis object condition, based on the contract customer information after rewritten by the customer management unit 1 and the analysis object conditions, set by the user, indicating the analysis to be made toward which information of the contract customer information. The churn rate list generation unit 10 rearranges the contract customers in descending order of the future churn rates predicted by the analysis prediction unit 8 and generates the contract customer list in which the contract customers are indicated in descending order of the future churn rates. The business operations plan generation unit 12 identifies the customer having the high future churn rates from among the contract customer list generated by the churn rate list generation unit 10 and generates the business operations plan for urging the salesperson to the business operations to the identified customers having the high future churn rates.

Note that the analysis prediction unit 8 in the foregoing example embodiments may utilize each of the analysis object conditions as the explanatory variables in the calculation of the prediction formula. In such a case, the correlation coefficients according to the numbers of the explanatory variables are identified by the analysis prediction unit 8. Further, the storage units such as the customer storage unit 2, the business information storage unit 4, the map information storage unit 14, the non-contract customer information storage unit 16, and the measures information storage unit 7 may be provided in any range as long as the information can be sent/received properly. In addition, a plurality of the foregoing storage units may be provided in any numbers as long as the information can be sent/received properly, thus storing the data separately.

The business operations assistance device 100 according to the foregoing example embodiments includes computer system. Further, the foregoing processing of the business operations assistance device 100 can be stored, in the form of a program, in a computer-readable storage medium. Therefore, the computer reads and executes the program from the storage medium, thus implementing the foregoing processing of the business operations assistance device 100. The computer-readable storage medium is a magnetic disk, an optical magnetic disk, a CD-ROM (compact disc read-only memory), a DVD-ROM (digital versatile discread only memory), semiconductor memory or the like. Further, the program may be delivered via communication lines to a computer, and the computer may execute the program.

The program may also be the program for realization of a part of the functions of the foregoing business operations assistance device 100. Further, the program may be the program capable of realization of the foregoing functions by combining with the program already stored in the computer system, so-called a differential file (differential program).

While the business operations assistance device and the business operations assistance method according to the disclosed subject matter is described in detail with the example embodiments, the disclosed subject matter is not limited to the foregoing example embodiments. The foregoing example embodiments are for illustration purpose but not for limitation, and a part of the foregoing components thereof can be omitted or replaced with another components. In other words, the disclosed subject matter contains a variety of changes and modifications within the scope of the invention defined in the attached claims.

### Industrial Applicability

The disclosed subject matter relates to the business operations assistance device and the business operations assistance method for assisting business operations using the cancellation prediction (Churn prediction) of the customer for different varieties of services, thus determining the business operations plan by predicting the future churn rate of the customer. However, the disclosed subject matter is not limited to the foregoing example embodiments and can also be applied when the business operations plan is determined by considering factors (parameters) other than the future churn rates.

### Reference signs List

1 customer management unit
2 customer storage unit
3 business information collection unit
4 business information storage unit
5 measures management unit
7 measures information storage unit
8 analysis prediction unit
10 churn rate list generation unit
11 continuation tendency pattern generation unit
12 business operations plan generation unit
14 map information storage unit
16 non-contract customer information storage unit
19 output unit
TBL1 customer data table
TBL2 business information data table
TBL4 measures information data table

## Claims

1. A business operations assistance device comprising:
a customer management unit configured to rewrite contract customer information at every change of the contract customer information including a new contract and a cancellation;
an analysis prediction unit configured to predict a future churn rate of a customer during a current contract period for each analysis object condition, based on the contract customer information after rewritten by the customer management unit and the analysis object condition, set by a user, indicating an analysis to be made toward which information of the contract customer information;
a churn rate list generation unit configured to rearrange a contract customer in descending order of the future churn rate predicted by the analysis prediction unit and generates a contract customer list in which the contract customer is indicated in descending order of the future churn rate; and
a business operations plan generation unit configured to identify the customer having a high future churn rate from the contract customer list generated by the churn rate list generation unit and generates a business operations plan describing business operations to the identified customer having the high future churn rate.

2. The business operations assistance device according to claim 1, further comprising:
a continuation tendency pattern generation unit configured to identify the analysis object condition corresponding to the contract customer having a low future churn rate predicted by the analysis prediction unit and generating a continuation tendency pattern list in which the identified analysis object condition is indicated;
wherein the business operations plan generation unit identifies, from among non-contract customer information, the customer who matches with the analysis object condition indicated by the continuation tendency pattern list generated by the continuation tendency pattern generation unit and generates the business operations plan describing the business operations to an identified non-contract customer.

3. The business operations assistance device according to claim 2 wherein a business operations generation unit specifies a first route for performing the business operations to the customer in descending order of the future churn rate, specifies a second route for performing the business operations to the non-contract customer prior to the customer having the high future churn rate when the non-contract customer who matches with the analysis object condition indicated by the continuation tendency pattern list is within a predetermined distance from the route, and generates the business operations plan including the first route and/or the second route.

4. A business operations assistance method comprising:
rewriting contract customer information at every change of the contract customer information including a new contract and a cancellation;
predicting a future churn rate of a customer during a current contract period for each analysis object condition, based on the contract customer information after rewritten and the analysis object condition, set by a user, indicating an analysis to be made toward which information of the contract customer information;
rearranging a contract customer in descending order of the predicted future churn rate and generating a contract customer list in which the contract custom is indicated in descending order of the future churn rate; and
identifying a customer having a high future churn rate from the contract customer list and generating a business operations plan describing business operations to the identified customer having the high future churn rate.

5. A program causing a computer to execute:
processing for rewriting contract customer information at every change of the contract customer information including a new contract and a cancellation;
processing for predicting a future churn rate of a customer during a current contract period for each analysis object condition, based on the contract customer information after rewritten and the analysis object condition, set by a user, indicating an analysis to be made toward which information of the contract customer information;
processing for rearranging a contract customer in descending order of the predicted future churn rate and generating a contract customer list in which the contract customer is indicated in descending order of the future churn rate; and
processing for identifying the customer having a high future churn rate from the contract customer list and generating a business operations plan describing business operations to the identified customer having the high future churn rate.
